# EUROPEAN PATENT APPLICATION

(11) **EP 3 290 926 A1**
(43) Date of publication of application: **07.03.2018**
(21) Application number: 16186826.0
(22) Date of filing: 01.09.2016
(51) Int. Cl.: G01N 35/00, B01L 9/00

(54) **HOUSING FOR A LABORATORY INSTRUMENT, LABORATORY INSTRUMENT AND METHOD FOR ASSEMBLING A LABORATORY INSTRUMENT**

(71) Applicant: Roche Diagnostics GmbH, 68305 Mannheim (DE); F. Hoffmann-La Roche AG, 4070 Basel (CH)
(72) Inventor: WASSERMANN, Johann Florian, 8810 Horgen (CH); SANGERMANO, Marco, 6010 Kriens (CH)
(74) Representative: Herzog, Fiesser & Partner Patentanwälte PartG mbB

(57) **Abstract**

A housing (102) for a laboratory instrument (100) is disclosed. The laboratory instrument (100) comprises a base plate (104), wherein a holder (118) configured to hold at least one consumable or a rack comprising at least one consumable is mounted onto said base plate (104), wherein the housing (102) comprises a frame (122), wherein the frame (122) is configured to support the base plate (104).

Further, a laboratory instrument (100) and a method for assembling a laboratory instrument (100) are disclosed.

## Description

### Technical field

Disclosed herein are a housing for a laboratory instrument, a laboratory instrument and a method for assembling a laboratory instrument.

### Background

In vitro diagnostic testing has a major effect on clinical decisions, providing physicians with pivotal information. Particularly there is great emphasis on providing quick and accurate test results in critical care settings. In vitro diagnostic testing is usually performed using laboratory instruments operable to execute one or more processing steps and/or workflow steps on one or more biological samples and/or one or more reagents, such as pre-analytical instruments, post-analytical instruments and also analytical instruments.

Analytical instruments / analyzers are configured to obtain a measurement value. An analyzer is operable to determine via various chemical, biological, physical, optical or other technical procedures a parameter value of the sample or a component thereof. An analyzer may be operable to measure said parameter of the sample or of at least one analyte and return the obtained measurement value. The list of possible analysis results returned by the analyzer comprises, without limitation, concentrations of the analyte in the sample, a digital (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types. An analytical instrument may comprise units assisting with the pipetting, dosing, and mixing of samples and/or reagents. The analyzer may comprise a reagent holding unit for holding reagents to perform the assays. Reagents may be arranged for example in the form of containers or cassettes containing individual reagents or group of reagents, placed in appropriate receptacles or positions within a storage compartment or conveyor. It may comprise a consumable feeding unit. The analyzer may comprise a process and detection system whose workflow is optimized for certain types of analysis. Examples of such analyzer are clinical chemistry analyzers, coagulation chemistry analyzers, immunochemistry analyzers, urine analyzers, nucleic acid analyzers, used to detect the result of chemical or biological reactions or to monitor the progress of chemical or biological reactions.

Known laboratory instruments such as the ones described in US 2004/0081583 A1 or US 2005/0123445 A1 are built up by a chassis or supporting structure enclosed by a housing. The chassis or supporting structure fulfills the function of the sufficiently rigid and precise assembling of the laboratory instrument. In most cases, a base plate is provided as a working surface which allows for the high precision of the mounting process. The base plate must also be rigid in order to transmit the weight forces to the chassis or supporting structure. The housing is provided exclusively for design and protective reasons but does not fulfill a technical function.

Thus, a plurality of constructional members is necessary for the built up of the laboratory instrument. Further, the constructional members must be precisely adapted to one another for being assembled.

### Summary

Embodiments of the disclosed housing for a laboratory instrument, laboratory instrument and method for assembling a laboratory instrument aim to simplify the assembly of the laboratory instrument and to increase the design variety.

Embodiments of the disclosed housing for a laboratory instrument, laboratory instrument and method for assembling a laboratory instrument have the features of the independent claims. Further embodiments of the invention, which may be realized in an isolated way or in any arbitrary combination, are disclosed in the dependent claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "particularly", "more particularly", "specifically", "more specifically" or similar terms are used in conjunction with additional / alternative features, without restricting alternative possibilities. Thus, features introduced by these terms are additional / alternative features and are not intended to restrict the scope of the claims in any way. The invention may, as the skilled person will recognize, be performed by using alternative features. Similarly, features introduced by "in an embodiment of the invention" or similar expressions are intended to be additional / alternative features, without any restriction regarding alternative embodiments of the invention, without any restrictions regarding the scope of the invention and without any restriction regarding the possibility of combining the features introduced in such way with other additional / alternative or non-additional / alternative features of the invention.

A housing for a laboratory instrument is disclosed. The laboratory instrument comprises a base plate. A holder configured to hold at least one consumable or a rack comprising at least one consumable is mounted onto said base plate. The housing comprises a frame. The frame is configured to support the base plate. As the housing comprises a frame configured to support the base plate, the housing serves a supporting structure. Thus, the housing fulfills a function not only as a design and protective element but also provides rigidity and stability. As a separate supporting structure may be omitted with the disclosed housing, the number of constructional members may be reduced. Particularly, all elements may be mounted to the housing. Further, weight of the laboratory instrument may be reduced with the disclosed housing. Still further, the construction of the housing allows for a modularity. Furthermore, the precision for the assembling process is met only by the base plate which does not need to be adapted a further supporting structure.

The term "laboratory instrument" as used herein refers to an analyzer and/or a pre/post-analytical instrument for processing a biological sample. A biological sample as used herein encompasses also any chemical product derived, copied, replicated, or reproduced from a sample taken from an organism. An analyzer as used herein encompasses an apparatus that makes a measurement on a biological sample to determine a physical characteristic or property of the biological sample. Often times, biological samples may be placed into sample tubes or sample vessels which are then placed into sample racks that are loaded into the laboratory instrument. The sample tubes and/or the racks may have tags which are read by an identification tag reader such as a barcode label. A "sample rack" is a carrier, typically made of plastics and/or metal, adapted for receiving, holding and transporting one or more sample tubes, e.g. 5 or more sample tubes e.g. disposed in one or more rows.

The term "base plate" as used herein refers to a plate mounted within the laboratory instrument which represents the actual a working surface on which the analysis processes of the laboratory instrument are carried out. For this purpose, the base plate is provided with instrument elements mounted thereon.

The frame may be configured such that the base plate is directly mountable onto the frame. Thus, mounting of the base plate is simplified as further connection or mounting elements for mounting the base plate onto the frame are not required.

The frame may comprise a plurality of profiles. The profiles are connected to one another. Thus, the frame may be designed in a modular manner as it is built up by profiles. Particularly, the use of profiles allows for a variety of designs and a scaled up or scaled down construction of the frame. The term "profile" as used herein refers to an elongated constructional member. The profiles may be made by extrusion. As such, the profiles may be so called extrusion profiles. The profiles may be connected to one another may connecting elements such as screws or clamps

The profiles may be made of plastics and/or metal. For example, the profiles are made of aluminium.

The frame may comprise opposing lateral frame portions and cross frame portions. The lateral frame portions may be connected to one another by means of the cross frame portions. Thus, the cross frame portions serve as a kind of cross-linking of the lateral frame portions such that the lateral frame portions are supported by the cross frame portions. Thereby, the frame is provided with rigidity or stiffened.

The cross frame portions may be fixed to the lateral frame portions. For example, the cross frame portions are fixed to the lateral frame portions by means of screws.

The base plate may be mounted onto the lateral frame portions. Thus, the weight force of the base plate is directly transmitted to the lateral frame portions. Thereby, the frame is stiffened by the weight force of the base plate.

Each of the lateral frame portions may comprise an upper frame portion, a lower frame portion and two connecting frame portions. The upper frame portion and the lower frame portion may be connected to the connecting frame portions. Thus, the lateral frame portions are connected to the connecting frame portions at several locations. Thereby, the stiffness and stability of the frame is increased.

The upper frame portion and the lower frame portion may be connected to the connecting frame portions by means of corner connections. Thus, a reliable and secure connection of the upper frame portion and the lower frame portion to the connecting frame portions is provided.

The frame may be stiffened. Thus, it is ensured that the frame maintains its shape such that all constructional members of the laboratory instrument remain precisely oriented relative to one another.

The housing may further comprise a bottom plate, a rear wall and two opposing side walls. The bottom plate, the rear wall and the side walls may be mounted onto the frame. Thus, an interior of the housing may be shielded from the surroundings of the laboratory instrument. Thereby, an unwanted access to the interior of the housing is prevented.

The side walls may be mounted onto the lateral frame portions so as to cover the lateral frame portions. The bottom plate may be mounted onto at least one of the cross frame portions so as to cover a lower portion between the lateral frame portions. The rear wall may be mounted onto at least one of the cross frame portions so as to cover a vertical portion between the lateral frame portions being substantially perpendicular to the lower portion. Thereby, the interior of the housing may be shielded at three sides thereof.

The frame may be stiffened by means of the bottom plate, the rear wall and the side walls mounted onto the frame. Thus, the bottom plate, the rear wall and the side walls act similar to a shear panel.

The housing may further comprise a hood. The hood may be pivotally mounted onto the frame. Thus, the frame also supports the hood. As the hood is pivotally mounted onto the frame, the hood may be moved from a closed position, in which an interior of the housing is prevented from access, to an open position, in which the interior of the housing is exposed so as to allow access, and *vice versa.*

The housing may further comprise a gas spring. The gas spring is mounted onto the hood and the frame. Thus, the pivotal movement of the hood is facilitated by means of the gas spring.

The hood may be mounted onto the upper frame portions. Thus, the hood may be moved from the closed position to the open position by means of an upward movement.

The housing may further comprise feet. The feet may be configured to support the housing. Thus, the weight force of the base plate is transmitted to the frame and from there to the feet.

The feet may be mounted onto the bottom plate. Thus, it is ensured that the feet bear the whole weight of the housing.

Further, a laboratory instrument is disclosed comprising a base plate, an assembly of instrument elements and a housing according to the above embodiments. The base plate is directly mounted onto the frame of the housing. At least some of the instrument elements are mounted onto the base plate. Thus, it is ensured that the housing supports most of the weight of the laboratory instrument.

The assembly of instrument elements may comprise at least one element selected from the group consisting of: fuse box, support for a printer, light source, air channel, cable tree, analytical instrument, teaching bolt or mark, identification or detection device, holder configured to hold a rack, optics for analyzing a sample, device for thermal treatment of liquids, device for handling consumables, device for processing of samples or reagents. Thus, a great variety of elements may be supported by the base plate.

Further, a method for assembling a laboratory instrument is disclosed comprising:
- mounting a frame of a housing,
- mounting a base plate onto the frame, wherein the frame is configured to support the base plate,
- mounting instrument elements onto the base plate.

Thus, the laboratory instrument may be assembled in a simplified manner.

The base plate may be directly mounted onto the frame. Thus, mounting of the base plate is simplified as further connection or mounting elements for mounting the base plate onto the frame are not required.

Mounting of the frame may comprise connecting a plurality of profiles to one another. Thus, the frame may be built up by profiles so as to decrease the weight.

Mounting of the frame may comprise connecting lateral frame portions to one another by means of cross frame portions such that the lateral frame portions oppose one another. Thus, the cross frame portions serve as a kind of cross-linking of the lateral frame portions such that the lateral frame portions are supported by the cross frame portions. Thereby, the frame is provided with rigidity or stiffened.

The cross frame portions may be fixed to the lateral frame portions. Thus, the cross frame portions are reliably secured to the lateral frame portions.

The cross frame portions may be fixed to the lateral frame portions by means of screws. Thus, the assembly is further facilitated.

The base plate may be mounted onto the lateral frame portions. Thus, the weight force of the base plate is directly transmitted to the lateral frame portions. Thereby, the frame is stiffened by the weight force of the base plate.

The lateral frame portions may be each mounted by connecting an upper frame portion and a lower frame portion to two connecting frame portions. Thus, the lateral frame portions are connected to the connecting frame portions at several locations. Thereby, the stiffness and stability of the frame is increased.

The upper frame portion and the lower frame portion may be connected to the connecting frame portions by means of corner connections. Thus, a reliable and secure connection of the upper frame portion and the lower frame portion to the connecting frame portions is provided.

The method may further comprise mounting a bottom plate, a rear wall and two opposing side walls to the frame. Thus, an interior of the housing may be shielded from the surroundings of the laboratory instrument. Thereby, an unwanted access to the interior of the housing is prevented.

The side walls may be mounted onto the lateral frame portions so as to cover the lateral frame portions. The bottom plate may be mounted onto at least one of the cross frame portions so as to cover a lower portion between the lateral frame portions. The rear wall may be mounted onto at least one of the cross frame portions so as to cover a vertical portion between the lateral frame portions being substantially perpendicular to the lower portion. Thereby, the interior of the housing may be shielded at three sides thereof.

The method may further comprise pivotally mounting a hood to the frame. Thus, the frame also supports the hood. As the hood is pivotally mounted onto the frame, the hood may be moved from a closed position, in which an interior of the housing is prevented from access, to an open position, in which the interior of the housing is exposed so as to allow access, and *vice versa*.

The method may further comprise mounting a gas spring onto the hood and the frame. Thus, the pivotal movement of the hood is facilitated by means of the gas spring.

The hood may be mounted onto the upper frame portions. Thus, the hood may be moved from the closed position to the open position by means of an upward movement.

The method may further comprise mounting feet. The feet may be configured to support the housing. Thus, the weight force of the base plate is transmitted to the frame and from there to the feet.

The feet may be mounted onto the bottom plate. Thus, it is ensured that the feet bear the whole weight of the laboratory instrument.

Summarizing the findings of the disclosed devices and method, the following embodiments are disclosed:
Embodiment 1: Housing for a laboratory instrument, wherein the laboratory instrument comprises a base plate, wherein a holder configured to hold at least one consumable or a rack comprising at least one consumable is mounted onto said base plate, wherein the housing comprises a frame, wherein the frame is configured to support the base plate.
Embodiment 2: Housing according to embodiment 1, wherein the frame is configured such that the base plate is directly mountable onto the frame.
Embodiment 3: Housing according to embodiment 1 or 2, wherein the frame comprises a plurality of profiles, wherein the profiles are connected to one another.
Embodiment 4: Housing according to embodiment 3, wherein the profiles are extrusion profiles.
Embodiment 5: Housing according to embodiment 3 or 4, wherein the profiles are made of aluminium.
Embodiment 6: Housing according to any one of embodiments 1 to 5, wherein the frame comprises opposing lateral frame portions and cross frame portions, wherein the lateral frame portions are connected to one another by means of the cross frame portions.
Embodiment 7: Housing according to embodiment 6, wherein the cross frame portions are fixed to the lateral frame portions.
Embodiment 8: Housing according to embodiment 7, wherein the cross frame portions are fixed to the lateral frame portions by means of screws.
Embodiment 9: Housing according to any one of embodiments 6 to 8, wherein the base plate is mounted onto the lateral frame portions.
Embodiment 10: Housing according to any one of embodiments 6 to 9, wherein each of the lateral frame portions comprises an upper frame portion, a lower frame portion and two connecting frame portions, wherein the upper frame portion and the lower frame portion are connected to the connecting frame portions.
Embodiment 11: Housing according to embodiment 10, wherein the upper frame portion and the lower frame portion are connected to the connecting frame portions by means of corner connections.
Embodiment 12: Housing according to any one of embodiments 1 to 11, wherein the frame is stiffened.
Embodiment 13: Housing according to any one of embodiments 6 to 11, further comprising a bottom plate, a rear wall and two opposing side walls, wherein the bottom plate, the rear wall and the side walls are mounted onto the frame.
Embodiment 14: Housing according to embodiment 13, wherein the side walls are mounted onto the lateral frame portions so as to cover the lateral frame portions, wherein the bottom plate is mounted onto at least one of the cross frame portions so as to cover a lower portion between the lateral frame portions, wherein the rear wall is mounted onto at least one of the cross frame portions so as to cover a vertical portion between the lateral frame portions being substantially perpendicular to the lower portion.
Embodiment 15: Housing according to embodiment 13 or 14, wherein the frame is stiffened by means of the bottom plate, the rear wall and the side walls mounted onto the frame.
Embodiment 16: Housing according to any one of embodiments 10 to 15, further comprising a hood, wherein the hood is pivotally mounted onto the frame.
Embodiment 17: Housing according to embodiment 16, further comprising a gas spring, wherein the gas spring is mounted onto the hood and the frame.
Embodiment 18: Housing according to embodiment 16 or 17, wherein the hood is mounted onto the upper frame portions.
Embodiment 19: Housing according to any one of embodiments 13 to 18, further comprising feet, wherein the feet are configured to support the housing.
Embodiment 20: Housing according to embodiment 19, wherein the feet are mounted onto the bottom plate.
Embodiment 21: Laboratory instrument, comprising a base plate, an assembly of instrument elements and a housing according to any one of embodiments 1 to 20, wherein the base plate is directly mounted onto the frame of the housing, wherein at least some of the instrument elements are mounted onto the base plate.
Embodiment 22: Laboratory instrument according to embodiment 21, wherein the assembly of instrument elements comprises at least one element selected from the group consisting of: fuse box, support for a printer, light source, air channel, cable tree, analytical instrument, teaching bolt or mark, identification or detection device, holder configured to hold a rack, optics for analyzing a sample, device for thermal treatment of liquids, device for handling consumables, device for processing of samples or reagents.
Embodiment 23: Method for assembling a laboratory instrument, comprising:
   - mounting a frame of a housing,
   - mounting a base plate onto the frame, wherein the frame is configured to support the base plate,
   - mounting instrument elements onto the base plate.
Embodiment 24: Method according to embodiment 23, wherein the base plate is directly mounted onto the frame.
Embodiment 25: Method according to embodiment 23 or 24, wherein mounting of the frame comprises connecting a plurality of profiles to one another.
Embodiment 26: Method according to any one of embodiments 23 to 25, wherein mounting of the frame comprises connecting lateral frame portions to one another by means of cross frame portions such that the lateral frame portions oppose one another.
Embodiment 27: Method according to embodiment 26, wherein the cross frame portions are fixed to the lateral frame portions.
Embodiment 28: Method according to embodiment 27, wherein the cross frame portions are fixed to the lateral frame portions by means of screws.
Embodiment 29: Method according to any one of embodiments 26 to 28, wherein the base plate is mounted onto the lateral frame portions.
Embodiment 30: Method according to any one of embodiments 26 to 29, wherein the lateral frame portions are each mounted by connecting an upper frame portion and a lower frame portion to two connecting frame portions.
Embodiment 31: Method according to embodiment 30, wherein the upper frame portion and the lower frame portion are connected to the connecting frame portions by means of corner connections.
Embodiment 32: Method according to any one of embodiments 26 to 31, further comprising mounting a bottom plate, a rear wall and two opposing side walls to the frame.
Embodiment 33: Method according to embodiment 32, wherein the side walls are mounted onto the lateral frame portions so as to cover the lateral frame portions, wherein the bottom plate is mounted onto at least one of the cross frame portions so as to cover a lower portion between the lateral frame portions, wherein the rear wall is mounted onto at least one of the cross frame portions so as to cover a vertical portion between the lateral frame portions being substantially perpendicular to the lower portion.
Embodiment 34: Method according to any one of embodiments 20 to 13, further comprising pivotally mounting a hood to the frame.
Embodiment 35: Method according to embodiment 34, further comprising mounting a gas spring onto the hood and the frame.
Embodiment 36: Method according to embodiment 34 or 35, wherein the hood is mounted onto the upper frame portions.
Embodiment 37: Method according to any one of embodiments 32 to 36, further comprising mounting feet, wherein the feet are configured to support the housing.
Embodiment 38: Method according to embodiment 37, wherein the feet are mounted onto the bottom plate.

### Short description of the figures

Further features and embodiments of the invention will be disclosed in more detail in the subsequent description, particularly in conjunction with the dependent claims. Therein the respective features may be realized in an isolated fashion as well as in any arbitrary feasible combination, as a skilled person will realize. The embodiments are schematically depicted in the figures. Therein, identical reference numbers in these figures refer to identical elements or functionally identical elements.

In the figures:
- Figure 1: shows a perspective view of a laboratory instrument;
- Figure 2: shows a perspective view of the laboratory instrument with some parts removed;
- Figure 3: shows a step of connecting profiles;
- Figure 4: shows a lateral frame portion;
- Figure 5: shows a step of connecting a lateral frame portion and a cross frame portion;
- Figure 6: shows a bottom plate;
- Figure 7: shows a step of mounting a side wall portion;
- Figure 8: shows a step of assembling the frame;
- Figure 9: shows the connected frame;
- Figure 10: shows a step of mounting laboratory instruments;
- Figure 11: shows a step of mounting a base plate onto the frame;
- Figure 12: shows the base plate mounted onto the frame;
- Figure 13: shows a step of mounting a side wall portion;
- Figure 14: shows a side wall portion;
- Figure 15: shows a step of mounting a hood; and
- Figure 16: shows the mounted hood.

### Detailed description

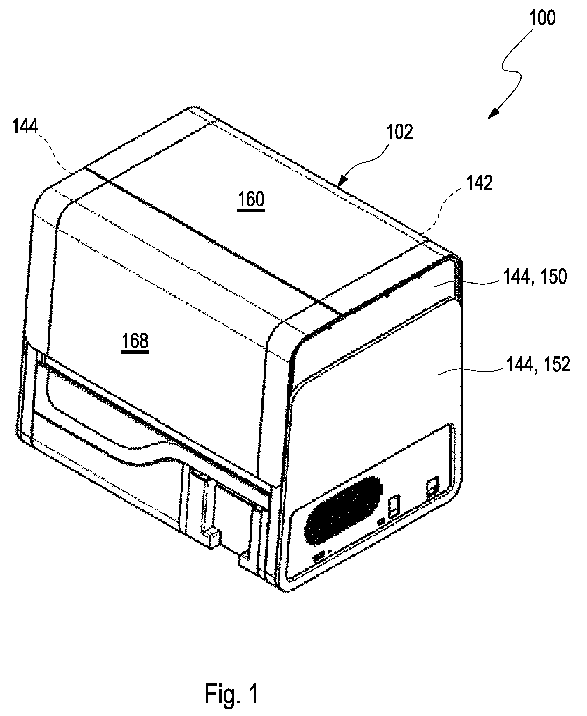

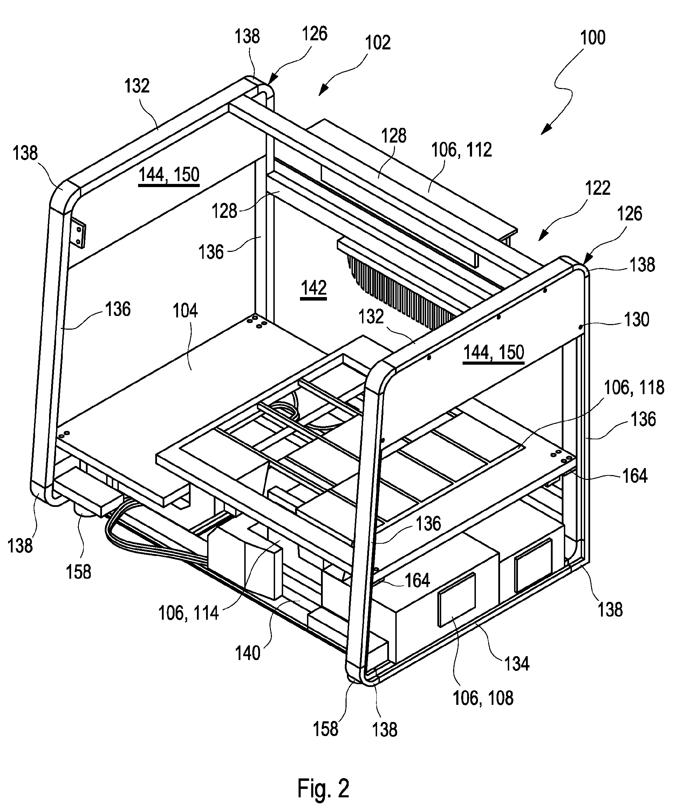

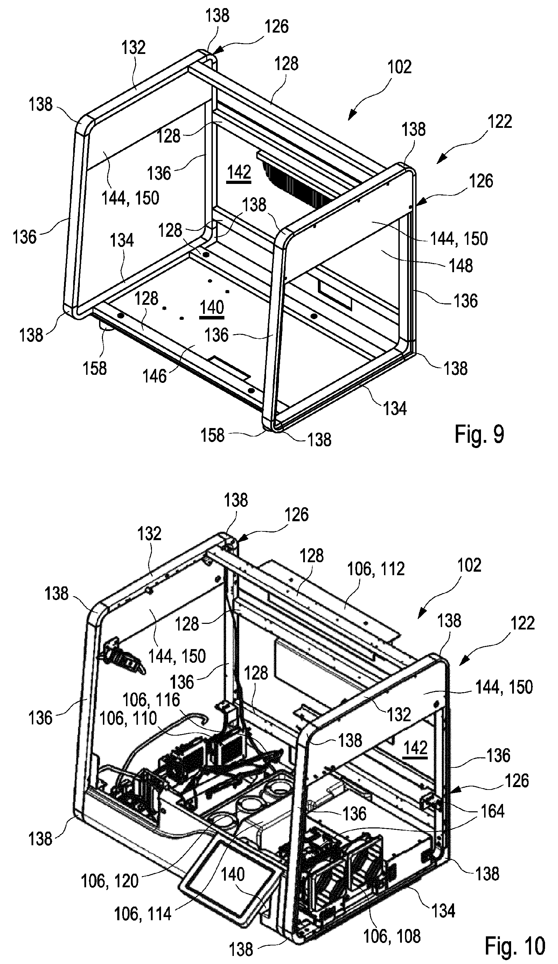

Figure 1 shows a perspective view of a laboratory instrument 100. Figure 1 also shows a housing 102 for the laboratory instrument 100. Figure 2 shows a perspective view of the laboratory instrument 100 with some parts thereof removed for explanatory reasons. The laboratory instrument 100 comprises a base plate 104. The laboratory instrument 100 further comprises an assembly of instrument elements 106. At least some of the instrument elements 106 are mounted onto the base plate 104. The assembly of instrument elements 106 comprises at least one element selected from the group consisting of: power fuse box 108, support 110 for a printer, light source 112, air channel 114, cable tree 116, analytical instrument, teaching bolt or mark, identification or detection device, a holder 118 configured to hold a consumable, optics for analyzing a sample, device for thermal treatment of liquids, device for handling consumables, device for processing of samples or reagents. In the present example, the laboratory instrument 100 comprises a power fuse box 108, a support 110 for a printer (Figure 10), a light source 112 such as an UV light source, an air channel 114 (Figure 10), a cable tree 116 (Figure 10), a holder 118 configured to hold a rack and a pan 120 (Figure 10). The holder 118 configured to hold at least one consumable such as a rack is mounted onto the base plate 104. Alternatively, a rack comprising at least one consumable may be mounted onto the base plate 104.

The housing 102 comprises a frame 122. The frame 122 is configured to support the base plate 104. The frame 122 comprises a plurality of profiles 124. The profiles 124 are connected to one another as will be explained in further detail below. The profiles 124 are extrusion profiles. The profiles 124 are made of aluminium. The frame 122 comprises lateral frame portions 126 and cross frame portions 128. The lateral frame portions 126 are connected to one another by means of the cross frame portions 128. The lateral frame portions 126 extend in a vertical plane while the cross frame portions 128 extend in a horizontal direction perpendicular to the vertical plane. The cross frame portions 128 are fixed to the lateral frame portions 126. In the present example, the cross frame portions 128 are fixed to the lateral frame portions 126 by means of screws 130. The lateral frame portions 126 and the cross frame portions 128 are formed or built up by the profiles 124. While the cross frame portions 128 are longitudinal shaped, the lateral frame portions 126 are shaped in a closed or ring-shaped manner. Each of the lateral frame portions 126 comprises an upper frame portion 132, a lower frame portion 134 and two connecting portions 136. The upper frame portion 132 and the lower frame portion 134 are connected to the two connecting portions 136. In the present example, the upper frame portion 132 and the lower frame portion 134 are connected to the two connecting portions 136 by means of corner connections 138. The corner connections 138 may be fixed to the upper frame portion 132 and the lower frame portion 134 by means of screws 130. In the present example, five cross frame portions 128 are present, wherein two cross frame portions 128 are connected to the lower frame portions 134, two cross frame portions 128 are connected to rear ones of the connecting portions 136, and one cross frame portions 128 is connected to the upper frame portions 132.

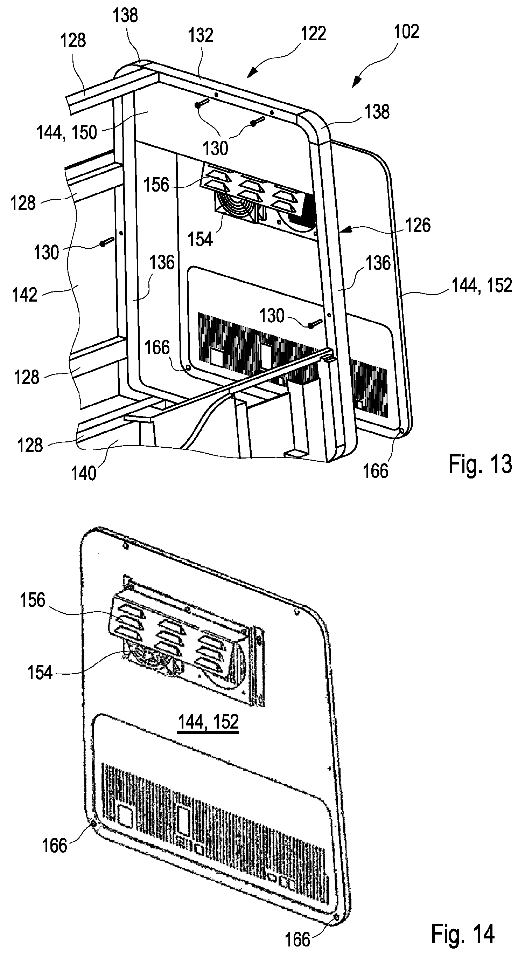

The housing 102 further comprises a bottom plate 140, a rear wall 142 and two opposing side walls 144. The bottom plate 140 is mounted onto at least one of the cross frame portions 128. In the present example, the bottom plate 140 is mounted onto the two cross frame portions 128 being connected to the lower frame portions 134 so as to cover a lower portion 146 between the lateral frame portions 126. The power fuse box 108, the support 110 for a printer, the air channel 114 and the cable tree 116 are mounted onto the bottom plate 140. The light source 112 is mounted onto the upper one of the two cross frame portions 128 being connected to the rear ones of the connecting portions 136. The rear wall 142 is mounted onto at least one of the cross frame portions 128 so as to cover a vertical portion 148 between the lateral frame portions 126 being substantially perpendicular to the lower portion 146. In the present example, the rear wall 142 is mounted onto the two cross frame portions 128 being connected to the rear ones of the connecting portions 136 and is mounted onto the rear ones of the connecting portions 136. The side walls 144 are mounted onto the lateral frame portions 126 so as to cover the lateral frame portions 126. As shown, the side walls 144 may each comprise an upper side wall portion 150 and a lower side wall portion 152. At one of the lower side wall portions 152, a fan 154 and a shielding member 156 for shielding the light emitted from the light source 112 are disposed (Figure 14).

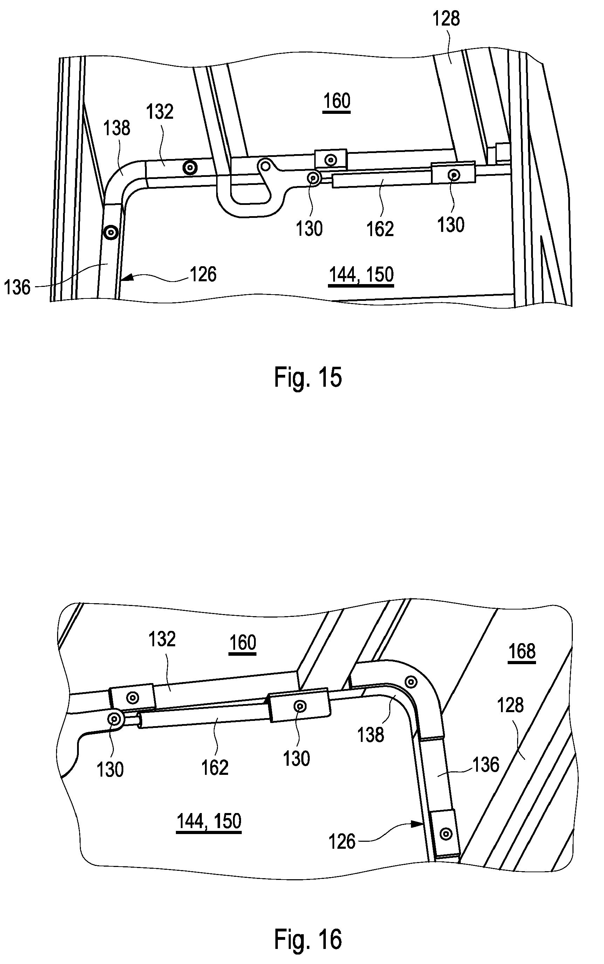

The housing 102 further comprises feet 158. The feet 158 are configured to support the housing 102. The feet 158 are mounted onto the bottom plate 140. In the present example, four feet 158 are present. The feet 158 are mounted onto the lower surface of the bottom plate 140. The feet 158 are located adjacent corners of the bottom plate 140. The housing 102 further comprises a hood 160. The hood 160 is pivotally mounted onto the frame 122. More particularly, the hood 160 is mounted onto the upper frame portions 132. The housing 102 further comprises a gas spring 162 (Figure 15). The gas spring 162 is mounted onto the hood 160 and the frame 122. Thus, the hood 160 is pivotally moveable between a closed position, in which the hood 160 covers an interior of the housing 102, and an open position, in which the interior of the housing 102 is accessible.

Furthermore, the frame 122 is configured such that the base plate 104 is directly mountable onto the frame 122. In the present example, the base plate 104 is mounted onto the connecting portions 136 of the frame 122 by means of angular brackets 164 without any further constructional member therebetween. With this construction, the frame 122 is stiffened. More particularly, the frame 122 is stiffened by means of the bottom plate 140, the rear wall 142 and the side walls 144 mounted onto the frame 122.

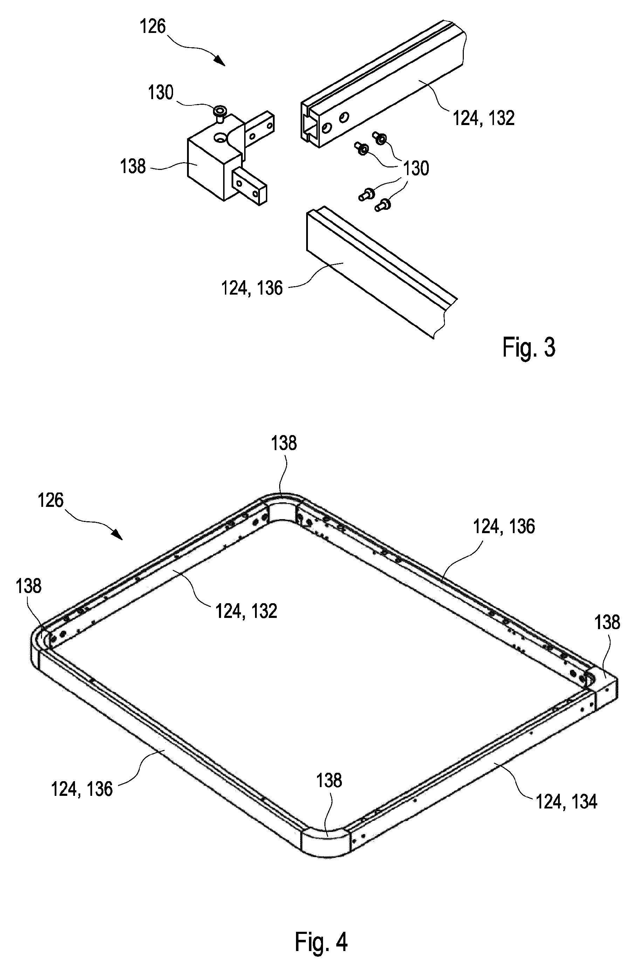

The laboratory instrument 100 is assembled in a manner as will be explained hereinafter. The frame 122 of the housing 102 is mounted. Figure 3 shows a step of connecting profiles 124. As will be explained, the frame 122 is mounted by connecting the plurality of profiles 124 in a specific manner to one another. Particularly, the lateral frame portions 126 are mounted in that for each lateral frame portion 126, the upper frame portion 132 and the lower frame portion 134 are connected to the two connecting portions 136 by means of the corner connections 138. The corner connections 138 are fixed to the upper frame portion 132 and the lower frame portion 134 by means of screws 130. Figure 4 shows a lateral frame portion 126 assembled in this manner.

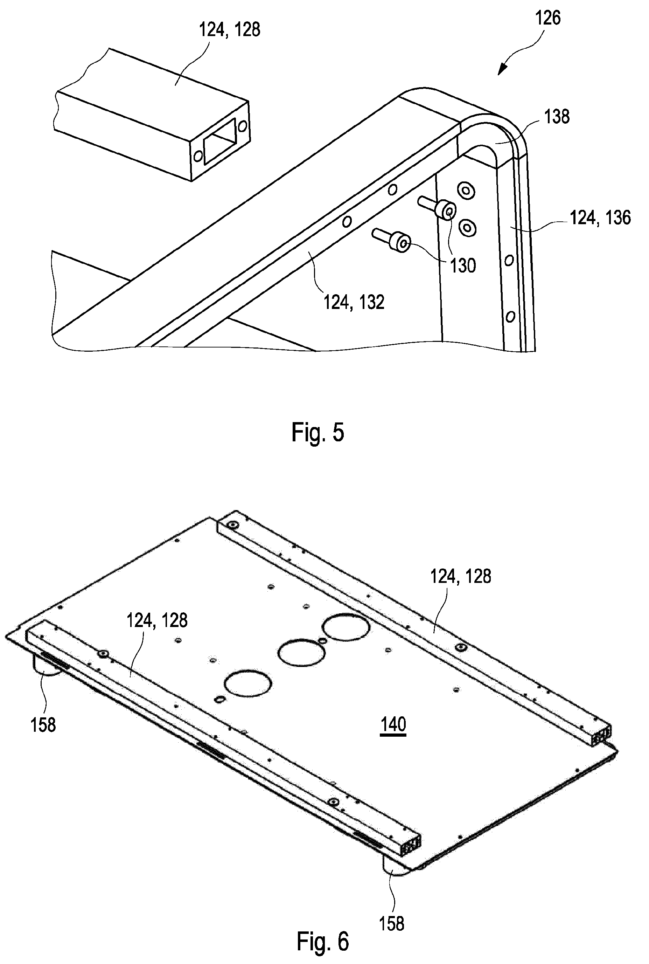

Figure 5 shows a step of connecting a lateral frame portion 126 and a cross frame portion 128. The cross frame portions 128 are connected to the lateral frame portions 126. Further, the cross frame portions 128 are fixed to the lateral frame portions 126 by means of screws 130, which are inserted from an exterior. It is to be noted that Figure 5 only shows the connection and fixation of the cross frame portion 128 to the upper frame portion 132.

Figure 6 shows a bottom plate 140. Figure 6 shows that the two cross frame portions 128 are mounted onto the bottom plate 140. The feet 158 are also mounted onto the bottom plate 140 at the lower surface thereof which is opposite of the side on which the two cross frame portions 128 are mounted. The cross frame portions 128 mounted onto the bottom plate 140 are connected to the lower frame portions 134 and fixed thereto by means of screws 130, which are inserted from an exterior. The bottom plate 140 may additionally be fixed to the lower frame portions 134 by means of screws 130, which are inserted from an exterior.

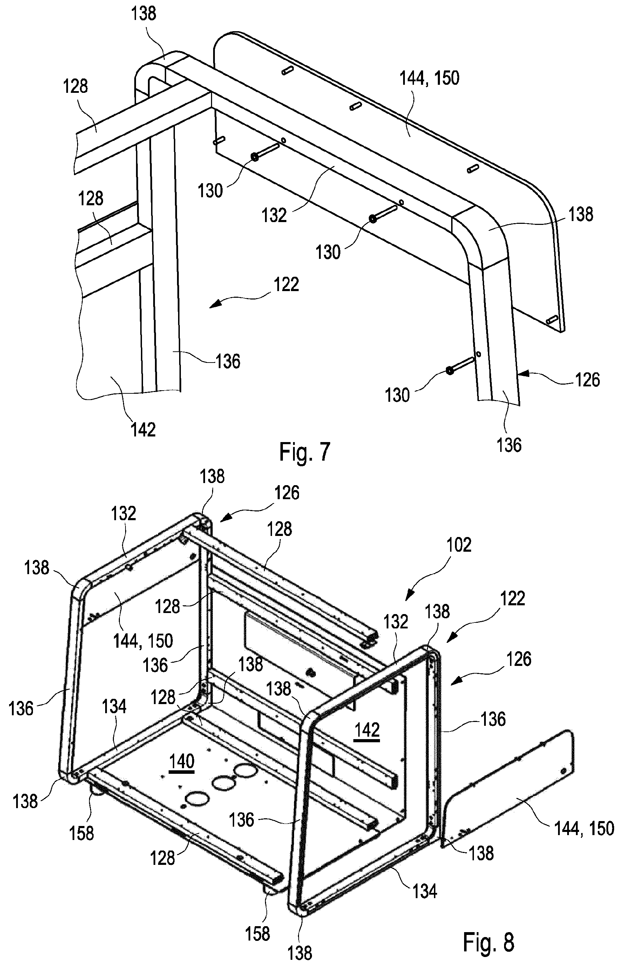

Figure 7 shows a step of mounting a side wall portion. The upper side wall portions 150 are mounted onto the lateral frame potions 126 and fixed thereto by means of screws 130, which are inserted from an interior of the housing 102.

Figure 8 shows a step of assembling the frame 122. Two cross frame portions 128 are mounted onto the rear wall 142 and are also mounted onto the connecting portions 136. Additionally, the two cross frame portions 128 mounted onto the rear wall 142 are fixed to the connecting portions 136 by means of screws 130. Thereby, the lateral frame portions 126 are connected to one another by means of the cross frame portions 128 such that the lateral frame portions 126 oppose one another.

Figure 9 shows the connected frame 122. As shown in Figure 9, with this mounting process, the housing 102 is provided with a three dimensional shape and more particularly is ashlar-formed. In the present example, the bottom plate 140 is mounted onto the two cross frame portions 128 being connected to the lower frame portions 134 so as to cover the lower portion 146 between the lateral frame portions 126. The rear wall 142 is mounted onto at least one of the cross frame portions 128 so as to cover the vertical portion 148 between the lateral frame portions 126 being substantially perpendicular to the lower portion 146. In the present example, the rear wall 142 is mounted onto the two cross frame portions 128 being connected to the rear ones of the connecting portions 136 and is mounted onto the rear ones of the connecting portions 136. The upper side wall portions 150 provide stiffness to the frame 122.

Figure 10 shows a step of mounting laboratory instruments 106. As shown in Figure 10, the power fuse box 108, the support 110 for a printer, the air channel 114 and the cable tree 116 are mounted onto the bottom plate 140. The light source 112 is mounted onto the upper one of the two cross frame portions 128 being connected to the rear ones of the connecting portions 136. The side walls 144 are mounted onto the lateral frame portions 126 so as to cover the lateral frame portions 126.

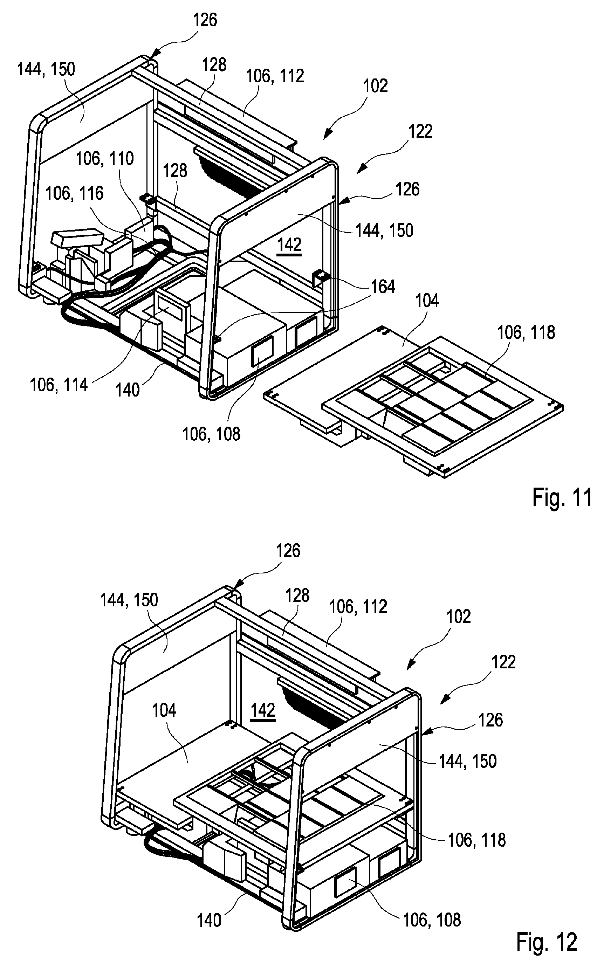

Figure 11 shows a step of mounting a base plate 104 onto the frame 122. As shown in Figure 11, some of the laboratory instruments 106 are mounted onto the base plate 104. More particularly, the holder 118 is mounted onto the base plate 104. As shown in Figure 11, the base plate 104 is mounted onto the frame 122, which is configured to support the base plate 104. More particularly, the base plate 104 is mounted onto the lateral frame portions 126 by means of the angular brackets 164 fixed to the lateral frame portions 136. Figure 12 shows the base plate 104 mounted onto the frame 122. Thus, the base plate 104 is directly mounted onto the frame 122.

Figure 13 shows a step of mounting a side wall portion 152. Figure 13 shows that the lower side wall portions 152 are mounted onto the lateral frame portions 126. Figure 14 shows a side wall portion 152. One of the lower side wall portions 152 is provided with the fan 154 and the shielding member 156. The lower side wall portions 152 are fixed to the connecting portions 136 by means of screws 130. In the present example, the lower side wall portions 152 are fixed to the connecting portions 136 by means of two screws 130, which are inserted from an interior of the housing 102, and two optional magnets 166. Thus, the screws 130 for the fixture of the lower side wall portions 152 are easily accessible such that the lower side wall portions 152 may be quickly removed for maintenance or repairing purposes. Thus, the side walls 144 are mounted onto the frame 122 and cover the lateral frame portions 126. It is to be noted that the lower side wall portions 152 may partly overlap the upper side wall portions 150.

Figure 15 shows a step of mounting a hood 160. As shown in Figure 15, the hood 160 is pivotally mounted onto the frame 122. More particularly, the hood 160 is mounted onto the upper frame portions 132. The gas spring 162 is mounted onto the hood 160 and the frame 122. Figure 16 shows the mounted hood 160. Thus, the hood 160 is pivotally moveable between a closed position, in which the hood 160 covers an interior of the housing 102, and an open position, in which the interior of the housing 102 is accessible. The hood 160 may optionally comprise a window 168. Thuy, an interior of the housing 102 is visible through the window 168 from an outside thereof. The window 168 may be fixed to a frame of the hood 160 by means of screws 130.

### List of reference numbers

- 100: laboratory instrument
- 102: housing
- 104: base plate
- 106: instrument element
- 108: power fuse box
- 110: support for a printer
- 112: light source
- 114: air channel
- 116: cable tree
- 118: holder
- 120: pan
- 122: frame
- 124: profile
- 126: lateral frame portion
- 128: cross frame portion
- 130: screw
- 132: upper frame portion
- 134: lower frame portion
- 136: connecting frame portion
- 138: corner connection
- 140: bottom plate
- 142: rear wall
- 144: side wall
- 146: lower portion
- 148: vertical portion
- 150: upper side wall portion
- 152: lower side wall portion
- 154: fan
- 156: shielding member
- 158: feet
- 160: hood
- 162: gas spring
- 164: angular bracket
- 166: magnet
- 168: window

## Claims

1. Housing (102) for a laboratory instrument (100), wherein the laboratory instrument (100) comprises a base plate (104), wherein a holder (118) configured to hold at least one consumable or a rack comprising at least one consumable is mounted onto said base plate (104), wherein the housing (102) comprises a frame (122), wherein the frame (122) is configured to support the base plate (104).

2. Housing (102) according to claim 1, wherein the frame (122) is configured such that the base plate (104) is directly mountable onto the frame (122).

3. Housing (102) according to claim 1 or 2, wherein the frame (122) comprises a plurality of profiles (124), wherein the profiles (124) are connected to one another.

4. Housing (102) according to any one of claims 1 to 3, wherein the frame (122) comprises opposing lateral frame portions (126) and cross frame portions (128), wherein the lateral frame portions (126) are connected to one another by means of the cross frame portions (128).

5. Housing (102) according to claim 4, wherein the cross frame portions (128) are fixed to the lateral frame portions (126).

6. Housing (102) according to claim 4 or 5, wherein the base plate (104) is mounted onto the lateral frame portions (126).

7. Housing (102) according to any one of claims 4 to 6, wherein each of the lateral frame portions (126) comprises an upper frame portion (132), a lower frame portion (134) and two connecting frame portions (136), wherein the upper frame portion (132) and the lower frame portion (134) are connected to the connecting frame portions (136).

8. Housing (102) according to any one of claims 1 to 7, wherein the frame (122) is stiffened.

9. Housing (102) according to any one of claims 4 to 7, further comprising a bottom plate (140), a rear wall (142) and two opposing side walls (144), wherein the bottom plate (140), the rear wall (142) and the side walls (144) are mounted onto the frame (122).

10. Housing (102) according to claim 9, wherein the frame (122) is stiffened by means of the bottom plate (140), the rear wall (142) and the side walls (144) mounted onto the frame (122).

11. Housing (102) according to any one of claims 7 to 10, further comprising a hood (160), wherein the hood (160) is pivotally mounted onto the frame (122).

12. Housing (102) according to claim 11, further comprising a gas spring (162), wherein the gas spring (162) is mounted onto the hood (160) and the frame (122).

13. Laboratory instrument (100), comprising a base plate (104), an assembly of instrument elements (106) and a housing (102) according to any one of claims 1 to 12, wherein the base plate (104) is directly mounted onto the frame (122) of the housing (102), wherein at least some of the instrument elements (106) are mounted onto the base plate (104).

14. Laboratory instrument (100) according to claim 13, wherein the assembly of instrument elements (106) comprises at least one element selected from the group consisting of: power fuse box (108), support (110) for a printer, light source (112), air channel (114), cable tree (116), analytical instrument, teaching bolt or mark, identification or detection device, holder (118) configured to hold a rack, optics for analyzing a sample, device for thermal treatment of liquids, device for handling consumables, device for processing of samples or reagents.

15. Method for assembling a laboratory instrument (100), comprising:
- mounting a frame (122) of a housing (102),
- mounting a base plate (104) onto the frame (122), wherein the frame (122) is configured to support the base plate (104),
- mounting instrument elements (106) onto the base plate (104).
